# EUROPEAN PATENT APPLICATION

(11) **EP 4 411 846 A1**
(43) Date of publication of application: **07.08.2024**
(21) Application number: 22875913.0
(22) Date of filing: 20.09.2022
(51) Int. Cl.: H01M 4/02, H01M 4/134, H01M 4/38, H01M 4/62

(54) **NEGATIVE ELECTRODE FOR RECHARGEABLE BATTERY, AND RECHARGEABLE BATTERY**

(30) Priority: 30.09.2021 JP 2021162379
(71) Applicant: Panasonic Intellectual Property Management Co., Ltd., Osaka-shi, Osaka 540-6207 (JP)
(72) Inventor: SATO, Naomichi, Kadoma-shi, Osaka 571-0057 (JP); YAMAMOTO, Norihisa, Kadoma-shi, Osaka 571-0057 (JP); SOGA, Masahiro, Kadoma-shi, Osaka 571-0057 (JP)
(74) Representative: Novagraaf International SA
(86) International application number: PCT/JP2022/034894
(87) International publication number: WO 2023/054042

(57) **Abstract**

This negative electrode for a rechargeable battery, according to an exemplary embodiment, comprises: a core; and a mixture layer formed on the core. The mixture layer includes: a first mixture layer; and a second mixture layer disposed on the first mixture layer. The first mixture layer and the second mixture layer have mutually different pore size distributions. In a case where a pore size corresponding to the maximum peak of the pore size distribution of the first mixture layer is defined as pore size A and a pore size corresponding to the maximum peak of the pore size distribution of the second mixture layer is defined as pore size B, the ratio of pore size A to pore size B (A/B) is greater than 0.01 and less than 1.

## Description

### TECHNICAL FIELD

The present disclosure generally relates to a negative electrode for a secondary battery, and a secondary battery including the negative electrode.

### BACKGROUND ART

A secondary battery such as a lithium ion battery is applied to in-vehicle use, use in a power storage, and the like, and is required to have improved battery performance such as high energy density, rapid-charge performance, and good cycle characteristics. Since an electrode as a main component of the battery largely affects the battery performance, many studies have been made on the electrode. For example, PATENT LITERATURE 1 discloses a negative electrode for a secondary battery, the negative electrode having a pore volume of pores having a diameter of greater than or equal to 3 nm and less than or equal to 50 nm and a pore volume of pores having a diameter of greater than or equal to 50 nm and less than or equal to 3000 nm. PATENT LITERATURE 1 describes the effects in that the decomposition of an electrolytic solution is suppressed and cycle characteristics are improved by using the negative electrode.

### CITATION LIST

### PATENT LITERATURE

PATENT LITERATURE 1: Japanese Unexamined Patent Application Publication No. 2008-305573

### SUMMARY

### TECHNICAL PROBLEM

However, when many pores having a small pore diameter are present in the negative electrode, the flow of the electrolytic solution from the positive electrode is inhibited, and in particular, the cycle characteristics at the time of high-rate charging and discharging are degraded. The negative electrode of PATENT LITERATURE 1 still has room for improvement in the high-rate charging and discharging characteristics.

It is an advantage of the present disclosure to provide a secondary battery having excellent cycle characteristics at the time of high-rate charging and discharging.

### SOLUTION TO PROBLEM

A negative electrode for a secondary battery according to the present disclosure comprises a core, and a mixture layer formed on the core, wherein the mixture layer includes a first mixture layer, and a second mixture layer disposed on the first mixture layer, the first mixture layer and the second mixture layer having different pore diameter distributions from each other, and when a pore diameter corresponding to a maximum peak in the pore diameter distribution in the first mixture layer is defined as a pore diameter A, and a pore diameter corresponding to a maximum peak in the pore diameter distribution in the second mixture layer is defined as a pore diameter B, a ratio (A/B) of the pore diameter A to the pore diameter B is larger than 0.01 and smaller than 1.

A secondary battery according to the present disclosure comprises the above-described negative electrode, a positive electrode, and an electrolyte.

### ADVANTAGEOUS EFFECT OF INVENTION

According to the negative electrode for a secondary battery according to the present disclosure, there can be provided a secondary battery having excellent cycle characteristics at the time of high-rate charging and discharging.

### BRIEF DESCRIPTION OF DRAWING

FIG. 1 is a sectional view of a non-aqueous electrolyte secondary battery, which is one example of an embodiment.
FIG. 2 is a sectional view of an electrode assembly, which is one example of an embodiment.

### DESCRIPTION OF EMBODIMENTS

The present inventors have found that the cycle characteristics at the time of high-rate charging and discharging can be greatly improved by making negative electrode mixture layers have a multi-layer structure in which pore distributions differ from each other, and controlling a ratio of a pore diameter of a second mixture layer on a surface of the mixture layer to a pore diameter of a first mixture layer on a core side to fall within a predetermined range. Using such a negative electrode enables a secondary battery with a high energy density to provide smooth flow of an electrolytic solution and good cycle characteristics at the time of high-rate charging and discharging.

The present inventors have found that the influence of the pore distribution of the second mixture layer on the high-rate charging and discharging performance is dominant compared with the pore distribution of the first mixture layer. On the basis of this finding, the present inventors have succeeded in developing a high-function electrode having a multi-layer structure in which the pore diameter of the first mixture layer is reduced to increase the packing density of the active material particles and the pore diameter of the second mixture layer is increased to improve the high-rate charging and discharging performance.

Hereinafter, one example of an embodiment of a negative electrode for a secondary battery and a secondary battery including the negative electrode according to the present disclosure will be described in detail with reference to the drawings. It should be noted that a configuration obtained by selectively combining constituent elements of multiple embodiments and modified examples described below is included in the scope of the present disclosure. In the present specification, notation of "a numerical value (1) to a numerical value (2)" means "greater than or equal to the numerical value (1) and less than or equal to the numerical value (2)".

Hereinafter, a cylindrical battery in which a wound-type electrode assembly 14 is housed in a bottomed cylindrical exterior housing can 16 is exemplified, but an exterior housing can of a battery is not limited to a cylindrical exterior housing can. A secondary battery according to the present disclosure may be, for example, a rectangular battery comprising a rectangular exterior housing can, or a coin-type battery comprising a coin-type exterior housing can, or may be a laminate battery comprising an exterior housing made of a laminate sheet including a metal layer and a resin layer. The electrode assembly is not limited to a wound type, and may be a stacked-type electrode assembly in which a plurality of positive electrodes and a plurality of negative electrodes are alternately stacked with separators interposed one by one between them.

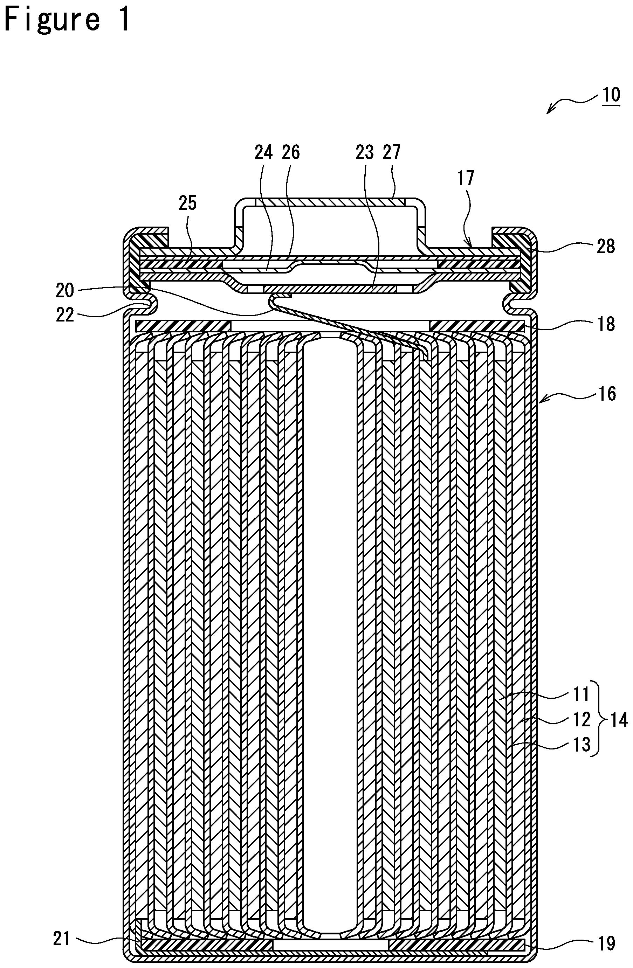

FIG. 1 is a sectional view of a secondary battery 10 of one example of embodiments. As illustrated in FIG. 1, the secondary battery 10 comprises the wound-type electrode assembly 14, an electrolyte, and the exterior housing can 16 that houses the electrode assembly 14 and the electrolyte. The electrode assembly 14 comprises a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metal container which includes an opening on one end side in an axial direction, and the opening of the exterior housing can 16 is capped with a sealing assembly 17. Hereinafter, for the convenience of explanation, the sealing assembly 17 side of the battery will be described as an upper side, and the bottom side of the exterior housing can 16 will be described as a lower side.

An aqueous electrolyte may be used as an electrolyte, but in the present embodiment, a non-aqueous electrolyte is used. The non-aqueous electrolyte includes a non-aqueous solvent, and an electrolyte salt dissolved in the non-aqueous solvent. Examples of the non-aqueous solvent include esters, ethers, nitriles, amides, and a mixed solvent containing two or more of these solvents. The non-aqueous solvent may contain a halogen-substituted solvent in which at least some hydrogen atoms of these solvents are replaced by halogen atoms such as fluorine. Examples of the non-aqueous solvents include ethylene carbonate (EC), ethyl methyl carbonate (EMC), and dimethyl carbonate (DMC), and a mixed solvent containing these solvents. For the electrolyte salt, for example, a lithium salt such as LiPF₆ is used.

The positive electrode 11, the negative electrode 12, and the separator 13 of the electrode assembly 14 each are band-shaped elongated member, and are spirally wound so as to be alternately stacked in a radial direction of the electrode assembly 14. The negative electrode 12 is formed to be one size larger than the positive electrode 11 in order to prevent precipitation of lithium. That is, the negative electrode 12 is formed to be longer in a longitudinal direction and a width direction (short-length direction) than the positive electrode 11. Two separators 13 are each formed to be at least one size larger than the positive electrode 11, and are disposed so as to interpose, for example, the positive electrode 11 therebetween. A porous sheet having ion permeability and an insulation property is used as the separator 13. The electrode assembly 14 includes a positive electrode lead 20 connected to the positive electrode 11 by welding or the like, and a negative electrode lead 21 connected to the negative electrode 12 by welding or the like.

Insulating plates 18 and 19 are disposed above and below the electrode assembly 14, respectively. In the example illustrated in FIG. 1, the positive electrode lead 20 extends toward the sealing assembly 17 side through a through hole in the insulating plate 18, and the negative electrode lead 21 extends toward the bottom side of the exterior housing can 16 along the outside of the insulating plate 19. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, serves as a positive electrode terminal. The negative electrode lead 21 is connected to an inner surface of the bottom of the exterior housing can 16 by welding or the like, and the exterior housing can 16 serves as a negative electrode terminal.

A gasket 28 is provided between the exterior housing can 16 and the sealing assembly 17 to ensure a sealing property inside the battery. The exterior housing can 16 has a grooved portion 22 formed by causing a part of a side wall to project inward and configured to support the sealing assembly 17. The grooved portion 22 is preferably formed annularly along a circumferential direction of the exterior housing can 16, and supports the sealing assembly 17 on its upper surface. The sealing assembly 17 is fixed to an upper portion of the exterior housing can 16 by the grooved portion 22 and an opening end of the exterior housing can 16 caulked to the sealing assembly 17.

The sealing assembly 17 has a structure in which the internal terminal plate 23, a lower vent member 24, an insulating member 25, an upper vent member 26, and the cap 27 are stacked in this order from the electrode assembly 14 side. Each member constituting the sealing assembly 17 has, for example, a disk shape or a ring shape, and members except for the insulating member 25 is electrically connected to each other. The lower vent member 24 and the upper vent member 26 are connected to each other at each of central portions thereof, and the insulating member 25 is interposed between circumferential edge portions of the vent members 24 and 26. If the internal pressure of the battery increases due to abnormal heat generation, the lower vent member 24 is deformed so as to push the upper vent member 26 upward toward the cap 27 side and ruptures, resulting in the disconnection of a current path between the lower vent member 24 and the upper vent member 26. If the internal pressure further increases, the upper vent member 26 ruptures, and gas is discharged from an opening of the cap 27.

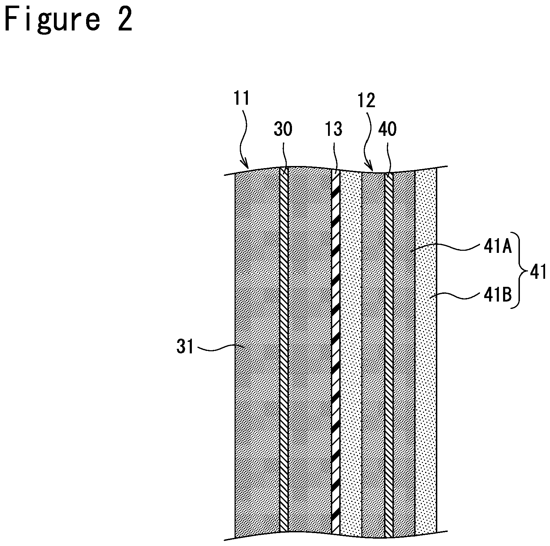

Hereinafter, the positive electrode 11 and the negative electrode 12 of the electrode assembly 14, and in particular, the negative electrode 12 will be described in detail with reference to FIG. 2. FIG. 2 is a diagram schematically illustrating a part of a cross section of the electrode assembly 14.

### [Positive Electrode]

As illustrated in FIG. 2, the positive electrode 11 comprises a core 30, and a mixture layer 31 formed on the core 30. Examples of the core 30 may include a foil of metal such as aluminum or an aluminum alloy, which is stable within a potential range of the positive electrode 11, and a film in which such a metal is disposed on a surface layer thereof. The mixture layer 31 contains a positive electrode active material, a conductive agent, and a binder, and is preferably provided on each surface of the core 30 except for a core exposed portion which is a portion to which the positive electrode lead is connected. A thickness of the mixture layer 31 is, for example, greater than or equal to 50 µm and less than or equal to 150 µm on each side of the core 30.

The positive electrode 11 can be produced by applying a positive electrode mixture slurry including a positive electrode active material, a conductive agent, a binder, and the like on a surface of the core 30, drying the resulting coating film, and then compressing the coating film to form the mixture layer 31 on each surface of the core 30. In an embodiment illustrated in FIG. 2, the mixture layer 31 of the positive electrode 11 has a single-layer structure, but may have a multi-layer structure similar to that of the mixture layer 41 of the negative electrode 12.

The mixture layer 31 includes a lithium transition metal composite oxide as the positive electrode active material. Examples of elements other than Li which are contained in the lithium transition metal composite oxide include Ni, Co, Mn, Al, B, Mg, Ti, V, Cr, Fe, Cu, Zn, Ga, Sr, Zr, Nb, In, Sn, Ta, W, Si, and P. The lithium transition metal composite oxide preferably contains at least Ni from the viewpoint of higher capacity, and the like.

One preferable example of the positive electrode active material is a composite oxide represented by the general formula Li_{y}Ni₍₁₋ₓ₎MₓO₂ (in the general formula, 0 ≤ x ≤ 0.2, 0 < y ≤ 1.2, and M represents at least one element selected from the group consisting of Co, Al, Mn, Fe, Ti, Sr, Ca, and B). In particular, M preferably contains at least one selected from the group consisting of Co, Al, and Mn. The positive electrode active material includes a composite oxide represented by the general formula Li_{y}Ni₍₁₋ₓ₎MₓO₂ (in the general formula, 0 < x ≤ 0.2, 0 < y ≤ 1.2, and M represents elements including at least Co and Al).

A volume-based median diameter (D50) of the positive electrode active material is, for example, greater than or equal to 3 µm and less than or equal to 30 µm, and preferably greater than or equal to 5 µm and less than or equal to 25 µm. The positive electrode active material may be a particle composed of one or a few primary particles, or a secondary particle formed by aggregation of a large number of primary particles. The D50 means a particle diameter at which the cumulative frequency reaches 50% from the smallest particle diameter in a volume-based particle size distribution, and is also referred to as a median diameter. The particle size distribution of a composite oxide (Z) can be measured using a laser diffraction particle size distribution measurement device (for example, MT3000II manufactured by microtracBEL Corporation) using water as a dispersion medium.

Examples of the conductive agent included in the mixture layer 31 may include carbon materials such as carbon black, acetylene black, Ketjen black, and graphite. A content of the conductive agent is preferably greater than or equal to 0.1% and less than or equal to 10% by mass, and more preferably greater than or equal to 0.2% and less than or equal to 5% by mass with respect to a mass of the mixture layer 31.

Examples of the binder included in the mixture layer 31 may include fluororesins such as polytetrafluoroethylene (PTFE) and polyvinylidene fluoride (PVDF), polyacrylonitrile (PAN), polyimide, acrylic resins, and polyolefin. These resins may be used in combination with cellulose derivatives such as carboxymethyl cellulose (CMC) or a salt thereof, polyethylene oxide (PEO), or the like. A content of the binder is, for example, greater than or equal to 0.1% and less than or equal to 5% by mass with respect to the mass of the mixture layer 31.

### [Negative Electrode]

As illustrated in FIG. 2, the negative electrode 12 comprises a core 40, and a mixture layer 41 formed on the core 40. Examples of the core 40 may include a foil of a metal such as copper or a copper alloy, which is stable within a potential range of the negative electrode 12, and a film in which such a metal is disposed on a surface layer thereof. The mixture layer 41 contains a negative electrode active material, a binder, and if necessary, a conductive agent, and is preferably provided on each surface of the core 40 except for a core exposed portion which is a portion to which the negative electrode lead is connected. A thickness of the mixture layer 41 is, for example, greater than or equal to 50 µm and less than or equal to 150 µm on each side of the core 40.

The negative electrode 12 can be produced by applying a negative electrode mixture slurry including a negative electrode active material, a conductive agent, a binder, and the like on a surface of a core 40, drying the resulting coating film, and then compressing the coating film to form the mixture layer 41 on each surface of the core 40. Note that, in the electrode, other layers besides the mixture layer may be formed on the core within the range in which the object of the present disclosure is not vitiated. An example of other layers is a protective layer which contains inorganic particles, a conductive agent, and a binder, and is interposed between the core and the mixture layer.

Although details will be described later, the mixture layer 41 includes a first mixture layer 41A, and a second mixture layer 41B disposed on the first mixture layer 41A, the first mixture layer 41A and the second mixture layer 41B having different pore diameter distributions from each other. When a pore diameter corresponding to a maximum peak in the pore diameter distribution in the first mixture layer 41A is defined as a pore diameter A, and a pore diameter corresponding to a maximum peak in the pore diameter distribution in the second mixture layer 41B is defined as a pore diameter B, a ratio (A/B) of the pore diameter A to the pore diameter B is larger than 0.01 and smaller than 1.

The mixture layer 41 includes a carbon-based active material as the negative electrode active material. Examples of the carbon-based active material include natural graphite such as flake graphite, and artificial graphite such as massive artificial graphite, and graphitized mesophase carbon microbeads. The D50 of the carbon-based active material is greater than or equal to 1 µm and less than or equal to 30 µm, and more preferably greater than or equal to 5 µm and less than or equal to 20 µm. As the negative electrode active material, the natural graphite and the artificial graphite may be used together, and two or more types of graphites having different D50 values may be also used in mixture.

The mixture layer 41 preferably includes graphite and a silicon material as the negative electrode active material. Using the graphite and the silicon material together makes it possible to increase the capacity while maintaining good cycle characteristics. A content of the silicon material is greater than or equal to 0.5% by mass, preferably greater than or equal to 2% by mass, and more preferably greater than or equal to 3% by mass with respect to a mass of the negative electrode active material. An upper limit of the content of the silicon material is, for example, 25% by mass, and preferably 20% by mass. One preferable example of the content of the silicon material is greater than or equal to 0.5% and less than or equal to 25% by mass, and more preferably greater than or equal to 2% and less than or equal to 20% by mass or greater than or equal to 3% and less than or equal to 15% by mass with respect to the mass of the negative electrode active material.

Examples of the above-described silicon material include a silicon oxide phase, and a silicon material (hereinafter, referred to as "SiO") containing Si dispersed in the silicon oxide phase. The D50 of the silicon material is generally smaller than the D50 of graphite, and is, for example, greater than or equal to 1 µm and less than or equal to 15 µm.

SiO is a compound which has a sea island structure in which fine Si particles are approximately uniformly dispersed in a matrix of amorphous silicon oxide, and is represented by the general formula SiOₓ (0 < x ≤ 2). The silicon oxide phase is composed of a group of particles that are finer than the Si particles. A content ratio of Si particles is preferably greater than or equal to 35% and less than or equal to 75% by mass relative to a total mass of SiO from the viewpoint of achieving both of the battery capacity and the cycle characteristics.

An average particle diameter of the Si particles dispersed in the silicon oxide phase is, for example, less than or equal to 500 nm, and preferably less than or equal to 200 nm or less than or equal to 50 nm before charging and discharging. After charging and discharging, it is, for example, less than or equal to 400 nm or less than or equal to 100 nm. The average particle diameter of the Si particles is measured by observing cross sections of SiO particles using an SEM or a transmission electron microscope (TEM) as an average value of the longest diameters of 100 Si particles.

On the surface of the SiO particles, a conductive layer composed of a material having a high conductivity may be formed. Suitable examples of the conductive layer include carbon coating made of a carbon material. A thickness of the conductive layer is preferably greater than or equal to 1 nm and less than or equal to 200 nm, and more preferably greater than or equal to 5 nm and less than or equal to 100 nm in consideration of ensuring the conductivity and the diffusibility of Li ions into the particles.

Examples of the binder included in the mixture layer 41, like in the positive electrode 11, may include fluororesins, PAN, polyimide, acrylic resins, and polyolefin, and in particular, a styrene-butadiene rubber (SBR) is preferably used. In the mixture layer 41, CMC or a salt thereof, polyacrylic acid (PAA) or a salt thereof, polyvinyl alcohol, or the like may be preferably included. In particular, SBR may be preferably used in combination with CMC or a salt thereof, or PAA or a salt thereof. The content of the binder is, for example, greater than or equal to 0.1% and less than or equal to 5% by mass with respect to the mass of the mixture layer 41.

The mixture layer 41 preferably includes a conductive agent. Examples of the conductive agent, like in the positive electrode 11, may include particulate carbons such as carbon black, acetylene black, Ketjen black, and graphite, but the conductive agent preferably includes at least fibrous carbons. Adding the fibrous carbons to the mixture layer 41 makes it possible to suppress generation of the active material particles isolated from a conductive path, and the effect of improving the cycle characteristics becomes more conspicuous. A content of the conductive agent is preferably greater than or equal to 0.1% and less than or equal to 10% by mass, and more preferably greater than or equal to 0.2% and less than or equal to 5% by mass with respect to the mass of the mixture layer 41. Note that, as the conductive agent, the particulate carbons and the fibrous carbons may be used in combination.

Examples of the fibrous carbon include carbon nanotubes (CNT), carbon nanohorns (CNH), carbon fibers (CNF), vapor grown carbon fibers, carbon fibers by electro-spinning, polyacrylonitrile (PAN)-based carbon fibers, and pitch-based carbon fibers. These may be used alone or used as a mixture of two or more thereof. In particular, the CNT is preferably used.

A layer structure of the CNT is not limited to a particular structure, and may be any of single-walled carbon nanotubes (SWCNT) and multi-walled carbon nanotubes (MWCNT), but the SWCNT is preferably used from the viewpoint of improving the conductivity of the mixture layer 41. An average fiber length of the CNT is preferably greater than or equal to 0.1 µm and less than or equal to 40 µm, more preferably greater than or equal to 0.3 µm and less than or equal to 20 µm, and especially preferably greater than or equal to 0.5 µm and less than or equal to 5 µm. A diameter of the CNT is, for example, greater than or equal to 1 nm and less than or equal to 100 nm.

The mixture layer 41 has a two-layer structure including the first mixture layer 41A and the second mixture layer 41B, and contains graphite and a silicon material as the negative electrode active material, as described above. The first mixture layer 41A is a lower layer formed on a surface of the core 40, and the second mixture layer 41B is an upper layer formed on a surface side of the mixture layer 41. The pore distributions of the respective mixture layers are different from each other, and the ratio (A/B) of the pore diameter A of the first mixture layer 41A to the pore diameter B of the second mixture layer 41B is larger than 0.01 and is smaller than 1 (0.01 < (A/B) < 1).

When the ratio (A/B) of the pore diameter of the first mixture layer 41A to the pore diameter of the second mixture layer 41B is less than or equal to 0.01, very small pore diameter of the first mixture layer causes the inhibition of the flow of an electrolytic solution, which degrades the cycle characteristics at the time of high-rate charging and discharging. When the ratio (A/B) of the pore diameter is greater than or equal to 1, for example, the permeation of the electrolytic solution into the mixture layer 41 is degraded, and the cycle characteristics at the time of high-rate charging and discharging deteriorate. That is, only when the above-described condition of 0.01 < (A/B) < 1 is satisfied, the cycle characteristics are specifically improved.

The pore distribution of the mixture layer indicates a pore volume (mL/g) in each pore diameter (µm), and is measured by the mercury penetration method using a mercury porosimeter (for example, Autopore IV 9500 manufactured by Micromeritics Instrument Corporation.). At least one peak exists in the pore distribution of each mixture layer, and a maximum peak among peaks corresponding to each mixture layer is defined as a pore diameter of each mixture layer. A sample to be evaluated for the pore diameter distribution is in a fully discharged state.

The pore distribution can be also measured by using a composite FIB-SEM system including a focused ion beam (FIB) system and a scanning electron microscope (SEM). Specifically, the pore distribution can be measured by the following method. Two-dimensional continuous images obtained by FIB-SEM are three-dimensionally constructed using image analysis software (for example, EX FACT VR manufactured by Nihon Visual Science, Inc.), and a cube image of 100 µm × 100 µm × 100 µm is obtained. The cube image is divided into a mixture region and a void region by image binarization. The extracted void region is thinned, and a medial axis (MA) passing through a center of the void is determined. A portion having a smaller area than the surrounding region in a surface perpendicular to MA, that is, a space (nodal pore) surrounded by a narrowed portion (throat) of the void is calculated. Since a radius of a sphere corresponding to the volume of each nodal pore can be regarded as a pore diameter, a histogram in which a horizontal axis indicates a radius of the nodal pore and a vertical axis indicates a product of a frequency and the radius of each nodal pore is created to obtain the pore distribution.

In the present embodiment, a pore distribution is measured in a state where only the first mixture layer 41A exists on the core 40, and the maximum peak of the pore distribution is identified as the pore diameter A of the first mixture layer 41A. An overall pore distribution of the mixture layer 41 is measured, and in the pore distribution, the maximum peak except for the peaks attributed to the pores in the first mixture layer 41A is identified as the peak corresponding to the pore diameter B in the second mixture layer 41B. Alternatively, an electrode plate having a single-layer structure of each mixture layer is produced, and a pore distribution of each mixture layer is measured, whereby peaks corresponding to the pore diameters A and B may be identified. When the upper layer can be distinguished from the lower layer based on the SEM image, the pore distribution of each mixture layer of the electrode plate having a multi-layer (two-layer) structure is measured using an FIB-SEM, whereby the pore diameter A and the pore diameter B can be identified.

The ratio (A/B) of the pore diameter A of the first mixture layer 41A to the pore diameter B of the second mixture layer 41B is preferably greater than or equal to 0.02 and less than or equal to 0.8 (0.02 ≤ (A/B) ≤ 0.8), more preferably greater than or equal to 0.05 and less than or equal to 0.55 (0.05 ≤ (A/B) ≤ 0.55), further preferably greater than or equal to 0.05 and less than or equal to 0.45 (0.05 ≤ (A/B) ≤ 0.45), and particularly preferably greater than or equal to 0.2 and less than or equal to 0.45 (0.2 ≤ (A/B) ≤ 0.45). When the ratio (A/B) of the pore diameter falls within the above-described range, the effect of improving the cycle characteristics becomes more conspicuous.

The pore diameter A of the first mixture layer 41A is, for example, greater than or equal to 0.01 µm and less than or equal to 2 µm, preferably greater than or equal to 0.05 µm and less than or equal to 1.5 µm, and more preferably greater than or equal to 0.3 µm and less than or equal to 0.8 µm. The pore diameter B of the second mixture layer 41B is, for example, larger than the pore diameter A and greater than or equal to 0.8 µm and less than or equal to 5 µm, preferably greater than or equal to 1 µm and less than or equal to 3 µm, and more preferably greater than or equal to 1 µm and less than or equal to 2 µm. When the pore diameter A, B falls within the above-described range and the ratio (A/B) of the pore diameter falls within the above-described range, the effect of improving the cycle characteristics becomes particularly conspicuous.

The packing density of the mixture layer 41 is, for example, greater than or equal to 1.2 g/cc, and preferably greater than or equal to 1.3 g/cc and less than or equal to 1.7 g/cc. When the packing density of the mixture layer 41 falls within the above-described range, the secondary battery 10 with a high energy density can be achieved. The packing density of each mixture layer is not limited to a particular value, and it is only required that the overall packing density of the mixture layer 41 falls within the above-described range, but the packing density of the first mixture layer 41A is normally larger than the packing density of the second mixture layer 41B.

A thickness ratio between the first mixture layer 41A and the second mixture layer 41B may be 1:1, and the thickness of the second mixture layer 41B may be larger than the thickness of the first mixture layer 41A, but when a difference in the thickness is provided, it is preferable to satisfy the thickness of the first mixture layer 41A > the thickness of the second mixture layer 41B. The thickness of the first mixture layer 41A may be, for example, greater than or equal to 50% and less than or equal to 80% or greater than or equal to 60% and less than or equal to 80% of the mixture layer 41. The thickness of the second mixture layer 41B may be, for example, greater than or equal to 20% and less than or equal to 50% or greater than or equal to 20% and less than or equal to 40% of the mixture layer 31.

The content of the conductive agent in the first mixture layer 41A may be equal to the content of the conductive agent in the second mixture layer 41B, and the content (θA) of the conductive agent in the first mixture layer 41A may be larger than the content (θB) of the conductive agent in the second mixture layer 41B, but when a difference in the content is provided, it is preferable to satisfy θA < θB. Since the second mixture layer 41B has a larger pore diameter than the first mixture layer 41A and therefore the packing density of the second mixture layer 41B is likely to be smaller than the first mixture layer 41A, it is preferable to increase an addition amount of the conductive agent to ensure good conductive path. On the other hand, as for the first mixture layer 41A, an addition amount of the conductive agent is reduced to relatively increase an amount of the active material, which makes it possible to increase the capacity.

If the above-described ratio (A/B) of the pore diameter, and the like can be satisfied, the constituent materials of the first mixture layer 41A and the second mixture layer 41B may be the same or different. In each mixture layer, the ratio (A/B) of the pore diameter can be also controlled to fall within an intended target range, by changing a compressive force in a rolling step. It is also possible to form the first mixture layer 41A on the surface of the core 40 and perform a first rolling step, and then form the second mixture layer 41B on the first mixture layer 41A and perform a second rolling step. At this time, a compressive force of the second rolling step is made smaller than a compressive force of the first rolling step.

In each mixture layer, the compressive force in the rolling step of the mixture layer may be changed, alternatively or in addition thereto, graphites having substantially the same composition and different D50 values may be used. For example, the ratio (A/B) of the pore diameter can be controlled to fall within an intended target range, by adjusting a mixture ratio of two types of graphite particles having different D50 values or adjusting a mixture ratio of the natural graphite and the artificial graphite.

### EXAMPLES

The present disclosure will be further described below with Examples, but the present disclosure is not limited to these Examples.

### <Example 1>

### [Production of Positive Electrode]

A mixture of a lithium transition metal composite oxide represented by LiNi_{0.88}Co_{0.09}Al_{0.03}O₂ was used as a positive electrode active material. The positive electrode active material, acetylene black, and polyvinylidene fluoride were mixed together at a solid content mass ratio of 100:1:1, so that a positive electrode mixture slurry was prepared using N-methyl-2-pyrrolidone (NMP) as a dispersion medium. Then, the positive electrode mixture slurry was applied on each surface of a positive electrode core made of an aluminum foil, the resulting coating film was dried, and then the coating film was compressed using a roller. The positive electrode core was cut into strips having a predetermined width, and a positive electrode was obtained in which a positive electrode mixture layer was formed on each surface of the positive electrode core.

### [Preparation of Negative Electrode Mixture Slurry]

A mixture of graphite and a silicon material represented by SiO in a mass ratio of 97:3 was used as a negative electrode active material. A mixture of natural graphite and artificial graphite was used as graphite. The negative electrode active material, a dispersion of styrene-butadiene rubber (SBR), carboxymethyl cellulose sodium salt, polyacrylic acid, and single-walled carbon nanotubes (CNTs) were mixed together at a solid content mass ratio of 100: 1: 1: 1:0.1, so that a negative electrode mixture slurry was prepared using water as the dispersion medium. Note that two types of first and second negative electrode mixture slurries were prepared which have different mixing ratios of the natural graphite and the artificial graphite.

The first negative electrode mixture slurry was applied on each surface of a negative electrode core made of a copper foil, the resulting first coating film was dried, and then the first coating film was compressed using a roller (first rolling step). Next, the second negative electrode mixture slurry was applied on the first coating film, the resulting second coating film was dried, and then the first and second coating films were compressed using a roller (second rolling step). Note that, the compressive force of the first rolling step is set to a value larger than the compressive force of the second rolling step. The second negative electrode core was cut into strips having a predetermined width, and a negative electrode was obtained in which a negative electrode mixture layer was formed on each surface of the negative electrode core.

In the produced negative electrode mixture layer having a multi-layer (two-layer) structure having the thickness ratio of 1:1, the pore diameter of each mixture layer was confirmed in the following procedure by the mercury penetration method using a mercury porosimeter (Autopore IV 9500 manufactured by Micromeritics Instrument Corporation). In a stage where the first rolling step was performed, the pore distribution was obtained by the mercury porosimeter, a maximum peak of 1.40 µm was confirmed, and the maximum peak was determined as the pore diameter A of the first mixture layer (layer A). Subsequently, in a stage where the second rolling step was performed, the pore distribution was obtained by the mercury porosimeter, and peaks of 1.40 µm and 1.80 µm in the pore distribution were confirmed. Since the peak of 1.40 µm was determined as the pore diameter A derived from the layer A, the peak of 1.80 µm was determined as the pore diameter B of the second mixture layer (layer B). The pore diameter of each mixture layer was determined in the above-described method, and the ratio (A/B) of the pore diameter was calculated as 0.78.

### [Preparation of Non-Aqueous Electrolytic Solution]

Ethylene carbonate and diethyl carbonate were mixed together in a volume ratio of 1:1, and then fluoroethylene carbonate was added thereto to achieve a concentration of 2% by mass. To the mixed solvent was added LiPF₆ to achieve a concentration of 1 mol/L, to thereby obtain a non-aqueous electrolytic solution.

### [Production of Test Cell]

The above-described positive electrode to which an aluminum lead was welded and the above-described negative electrode to which a nickel lead was welded were spirally wound with a separator interposed therebetween, to thereby prepare a wound-type electrode assembly. The electrode assembly was housed in a bottomed cylindrical exterior housing can having a diameter of 18 mm and a height of 65 mm, the above-described non-aqueous electrolytic solution was poured into the exterior housing can, and then an opening of the exterior housing can was sealed by a sealing assembly via a gasket, to thereby obtain a test cell X1 (non-aqueous electrolyte secondary battery).

### <Examples 2 to 9, Comparative Examples 2 and 3>

A negative electrode and test cells X2 to X9, and Y2, and Y3 were produced in the same manner as in Example 1 except that at least one of a change of the mixing ratio of the natural graphite and the artificial graphite to prepare two type of negative electrode mixture slurries, use of graphite materials having different particle diameters and surface conditions, adjustment of a solid content ratio of the slurry or the amount of binder in the mixture layer, and a change of the compressive force in the above-described each rolling step was performed so that the ratio (A/B) of the pore diameter of each mixture layer became values indicated in Table 1.

### <Comparative Example 1>

A test cell Y1 was produced in the same manner as in Example 1 except that in production of the negative electrode, the negative electrode mixture slurry with changed mixing ratio of the natural graphite and the artificial graphite was prepared and the coating film having a single-layer structure was formed on the core, so that the negative electrode mixture layer had a signal-layer structure having a pore diameter of 0.76 µm.

### [High-Rate, Cycle Test]

Each of the produced test cells was subjected to a constant current charging at the current of 0.7C until the battery voltage became 4.2 V. Then, each test cell was subjected to a constant current discharging at the current of 0.5C until the battery voltage became 2.5 V. The charging and discharging cycle was repeated 150 cycles, and the capacity retention rate was measured by the following equation.
Evaluation results are shown in Table 1. Capacity retention rate (%) = (150th-cycle discharge capacity/1st-cycle discharge capacity) × 100

**[Table 1]**

| | Electrode plate structure | A/B | Pore diameter A (µm) | Pore diameter B (µm) | Capacity retention rate (%) |
|---|---|---|---|---|---|
| X1 | Multi-layer | 0.78 | 1.40 | 1.80 | 77.0 |
| X2 | Multi-layer | 0.55 | 0.80 | 1.45 | 80.0 |
| X3 | Multi-layer | 0.43 | 0.55 | 1.29 | 83.2 |
| X4 | Multi-layer | 0.39 | 0.62 | 1.60 | 84.8 |
| X5 | Multi-layer | 0.23 | 0.40 | 1.78 | 85.6 |
| X6 | Multi-layer | 0.31 | 0.50 | 1.61 | 85.2 |
| X7 | Multi-layer | 0.28 | 0.37 | 1.29 | 84.2 |
| X8 | Multi-layer | 0.05 | 0.10 | 2.00 | 82.0 |
| X9 | Multi-layer | 0.02 | 0.06 | 3.00 | 78.0 |
| Y1 | Single-layer | 1.00 | 0.76 | - | 75.0 |
| Y2 | Multi-layer | 1.11 | 1.43 | 1.29 | 74.0 |
| Y3 | Multi-layer | 0.01 | 0.05 | 5.00 | 75.0 |

As shown in Table 1, as compared with the test cells in Comparative Examples, all test cells in Examples have higher capacity retention rate after the high-rate cycle test and more excellent cycle characteristics at the time of high-rate charging and discharging. When the negative electrode having the mixture layer having a single-layer structure was used (Comparative Example 1) and the ratio (A/B) of the pore diameters of the layer A and the layer B did not satisfy the condition of 0.01 < (A/B) < 1 even when the negative electrode having the mixture layer having a two-layer structure was used (Comparative Examples 2 and 3), the capacity greatly decreased in the high-rate cycle test.

In the test cell in each Example, when the ratio (A/B) of the pore diameter satisfied the condition of 0.05 ≤ (A/B) ≤ 0.55, the capacity retention rate was increased to greater than or equal to 80%, and when the ratio (A/B) of the pore diameter satisfied the condition of 0.05 ≤ (A/B) ≤ 0.45, the capacity retention rate was increased to greater than or equal to 82%, and when the ratio (A/B) of the pore diameter satisfied the condition of 0.2 ≤ (A/B) ≤ 0.45, the capacity retention rate was increased to greater than or equal to 83%, and therefore the effect of improving the cycle characteristics became more conspicuous.

### REFERENCE SIGNS LIST

10 Secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30, 40 Core, 31, 41 Mixture layer, 41B First mixture layer, 41B Second mixture layer

## Claims

1. A negative electrode for a secondary battery, comprising:
a core; and a mixture layer formed on the core,
wherein the mixture layer includes a first mixture layer, and a second mixture layer disposed on the first mixture layer, the first mixture layer and the second mixture layer having different pore diameter distributions from each other, and
when a pore diameter corresponding to a maximum peak in the pore diameter distribution in the first mixture layer is defined as a pore diameter A, and a pore diameter corresponding to a maximum peak in the pore diameter distribution in the second mixture layer is defined as a pore diameter B, a ratio (A/B) of the pore diameter A to the pore diameter B is larger than 0.01 and smaller than 1.

2. The negative electrode for a secondary battery according to claim 1, wherein
the ratio (A/B) of the pore diameter A to the pore diameter B is greater than or equal to 0.02 and less than or equal to 0.8.

3. The negative electrode for a secondary battery according to claim 1 or 2, wherein
the mixture layer contains a silicon material as a negative electrode active material.

4. The negative electrode for a secondary battery according to claim 1 or 2, wherein
the mixture layer contains carbon nanotubes as a conductive agent.

5. A secondary battery, comprising:
the negative electrode according to any one of claims 1 to 4;
a positive electrode; and
an electrolytic solution.
